# EUROPEAN PATENT SPECIFICATION

(11) **EP 3 670 912 B1**
(45) Date of publication and mention of the grant of the patent: **14.07.2021**
(21) Application number: 19209411.8
(22) Date of filing: 15.11.2019
(51) Int. Cl.: F04B 49/035, F04B 53/10, F04B 49/02

(54) **PRESSURE REGULATING BYPASS VALVE**
DRUCKREGELNDES BYPASS-VENTIL
SOUPAPE DE DÉRIVATION DE RÉGULATION DE PRESSION

(30) Priority: 19.12.2018 IT 201800020233
(43) Date of publication of application: 24.06.2020
(73) Proprietor: Tecomec S.r.l., 42124 Reggio Emilia (IT)
(72) Inventor: TONDELLI, Corrado, 42020 Albinea, Reggio Emilia (IT); ZEDIU, Paul Marius, 42124 REGGIO EMILIA (IT)
(74) Representative: Paparo, Aldo

(56) References cited:
- EP-A2- 1 054 158
- GB-A- 1 488 447
- US-A- 5 992 450
- US-A1- 2012 211 034

## Description

The present invention relates to a pressure regulating bypass valve.

Said valve has a particular field of application for pressure washing machines, but it can be used in any water circuit for high pressure washing.

High pressure washing systems generally comprise a piston pump, intended to bring a washing fluid under pressure, a valve of the type in question and a delivery gun, provided with a lever-operated valve that is designed to enable an operator to control the delivery of the fluid.

Unless electric devices for switching off the pump automatically are provided, it operates under a continuous regime and thus continues to run even when the gun is closed by the operator.

Given the incompressibility of the fluid, it is necessary for it to be discharged into a low pressure tank through a bypass conduit, or recirculated to the pump. The opening of said conduit is controlled by means of a pressure regulating bypass valve, which is activated upon the closing of the gun. An example of a solution is described in EP1054158B1, which illustrates a valve in which a movable piston controls the opening of a bypass conduit and a conduit delivering to a delivery gun and is subjected to the pressure of a spring. Another example of this kind of valve is described in the document GB1488447.

Such piston is subjected on a first face to the pressure of the water coming from the pump and on a second, opposite face to the pressure of the water flowing out towards the gun.

The operating principle of the valve provides, in the absence of the delivery of water from the gun, for a high pressure downstream of the piston, which enables the spring to maintain the piston in the bypass position.

Following the opening of the gun, the pressure downstream of the piston decreases and, in principle, the upstream pressure (determined by the pump) should be able to overcome the resistance of the spring in order to move the piston so as to close the bypass conduit and open the delivery conduit.

Disadvantageously, the dimensioning of the components of this system is rather complicated and the same is prone to a high probability of malfunctioning due to plays, tolerances and wear of the parts.

The initial delivery phase is one of the most problematic. In fact, with the bypass conduit completely open the pressure upstream of the piston remains rather weak and the pressure difference that is created might not be sufficient to move the piston.

One of the problems is caused by the excessively high force exerted by the spring acting on the piston.

In fact, such spring must be dimensioned so as to enable a rapid opening of the bypass conduit following the closure of the delivery gun, in order to avoid damage to the system.

This type of dimensioning risks causing an overly intense elastic force of the spring in the first phase of delivery, thereby preventing the correct movement of the piston and maintaining the bypass conduit open.

A further problem is represented by the dimensioning of the piston which, if made too flush with the conduit in which it moves risks jamming or generating excessive resistance, contributing to a possible failure of the piston to translate, and if made with too much clearance relative to the conduit generates excessive leaks that reduce the pressure gradient which is necessary for the above-described translation.

In this context, the technical task at the basis of the present invention is to propose a pressure regulating bypass valve which overcomes at least some of the above-mentioned drawbacks of the prior art.

In particular, it is an object of the present invention to provide a pressure regulating bypass valve capable of improving the operation of the valve compared to the prior art, increasing the reliability thereof, reducing the possibility of malfunctions and slowing down wear.

The stated technical task and specified objects are substantially achieved by a pressure regulating bypass valve comprising the technical features disclosed in one or more of the appended claims. The dependent claims correspond to different possible embodiments of the invention.

Additional features and advantages of the present invention will become more clearly apparent from the approximate and hence non-limiting description of a preferred but non-exclusive embodiment of a pressure regulating bypass valve and an associated pressure washing machine. This description will be set out below with reference to the appended drawings, which are provided solely for illustrative and therefore non-limiting purposes, in which:
- figure 1 shows a sectional side view of a pressure regulating bypass valve made in accordance with the present invention;
- figure 2 shows a sectional side view of the valve of figure 1 in a different operating configuration;
- figure 3 shows a sectional side view of the valve of figure 1 in a different operating configuration;

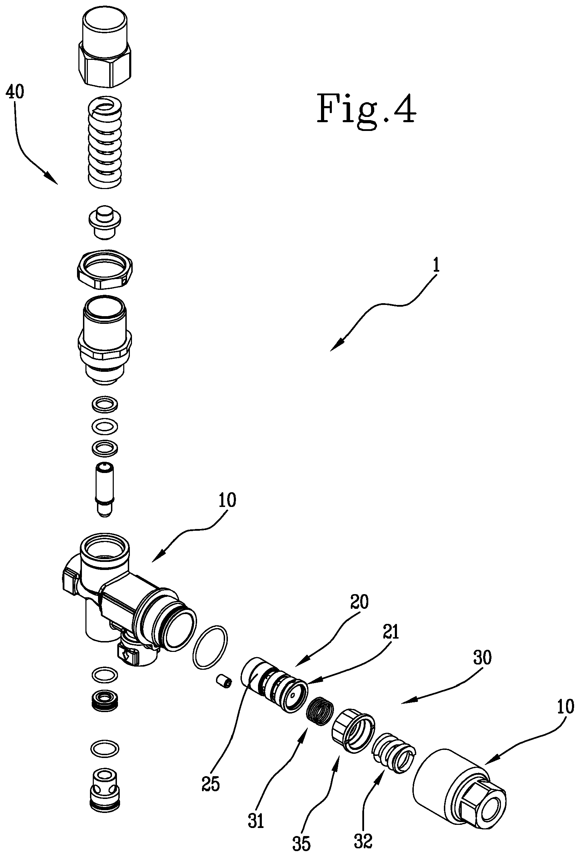

- figure 4 shows an exploded perspective view of the valve of figure 1;

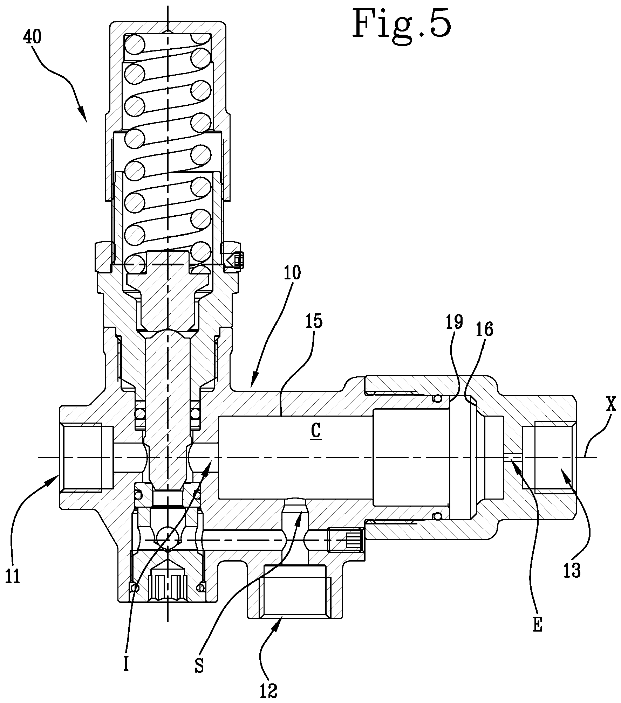

- figure 5 shows a sectional side view of the valve of figure 1 with some elements removed so as to highlight others;

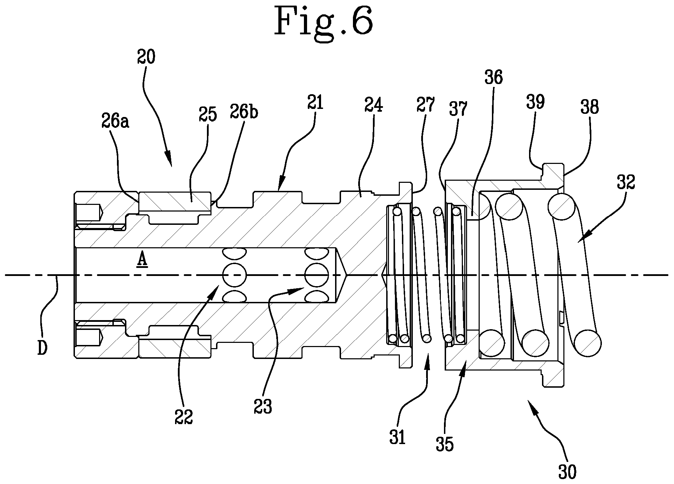

- figure 6 shows a sectional side view of a particular of the valve of figure 1;

With reference to the appended figures, a pressure regulating bypass valve is generically denoted with the reference number 1 and will be hereinafter referred to with the abbreviated notation "valve 1".

The valve 1 comprises a hollow element 10 consisting in turn of a plurality of hollow bodies reversibly connected to one another.

The hollow element 10 internally defines a chamber "C", a first connecting portion 11 connectable to a respective conduit so as to bring about a fluid connection between the chamber "C" and the outlet channel of a hydraulic pump, a second connecting portion 12 connectable to a respective conduit so as to bring about a fluid connection between the chamber "C" and the supply channel of a hydraulic pump and a third connecting portion 13 connectable to a respective conduit so as to bring about a fluid connection between the chamber "C" and a delivery gun.

The chamber "C" preferably extends longitudinally along an axis of extension "X" common to the first and third connecting portions 11 and 13, whereas the second connecting portion preferably extends perpendicularly to the axis of extension "X".

Furthermore, the hollow element 10 has an internal surface 15 that laterally delimits the chamber "C" and preferably extends along the axis of extension "X" and a rear abutment wall 16 that delimits the chamber "C" at the rear.

More in particular, the hollow element 10 defines an inlet section "I" between the chamber "C" and the first connecting portion 11, a discharge section "S" between the chamber "C" and the second connecting portion 12 and a delivery section "E" between the chamber "C" and the third connecting portion 13.

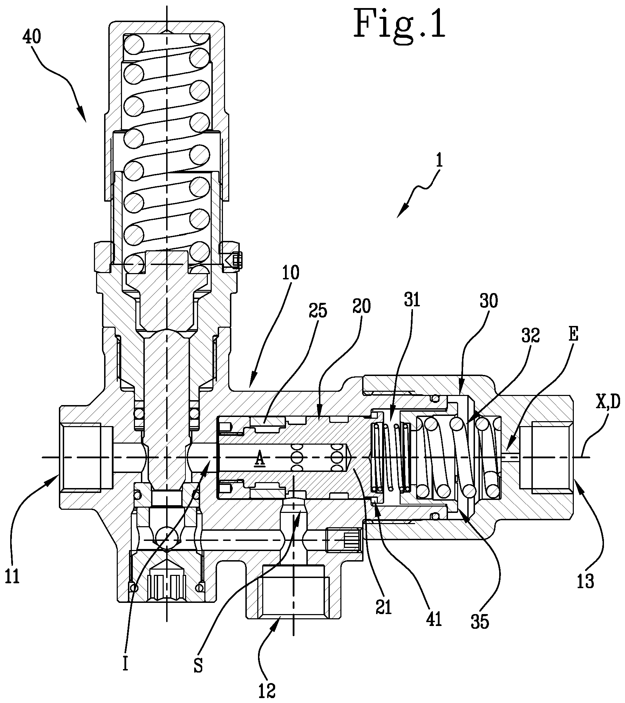

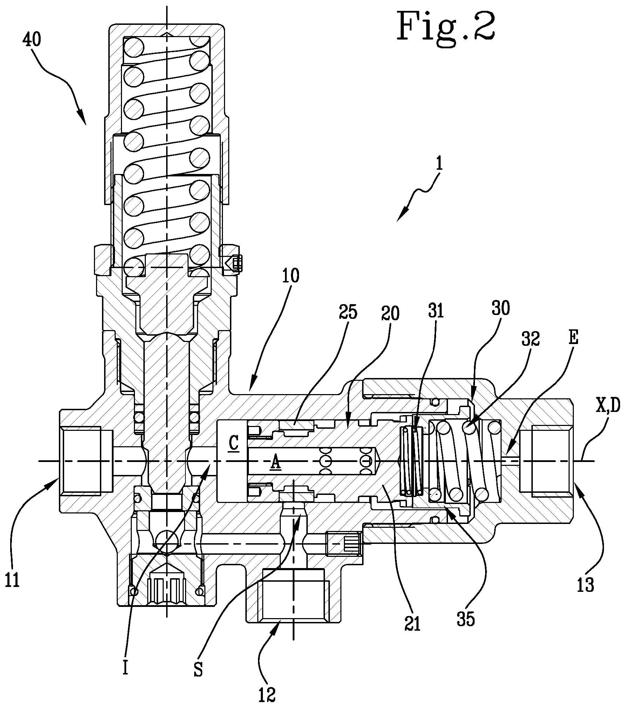

The valve 1 further comprises an interception member 20 housed inside chamber "C" and movable, preferably along the axis of extension "X", between a discharge position illustrated in figure 1 and a delivery position, illustrated in figure 2.

In the delivery position, the interception member 20 defines a fluid connection between the inlet section "I" and the delivery section "E" and isolates the inlet and delivery sections "I" and "E" from the discharge section "S", preferably hermetically occluding the latter.

In the discharge position, the interception member 20 defines a fluid connection between the inlet section "I" and the discharge section "S" and preferably at least partially isolates the inlet and discharge sections "I" and "S" from the delivery section "E".

In the discharge position, the interception member 20 preferably allows a reduced passage of fluid between the inlet section "I" and the delivery section "E" due to leakage caused by tolerances in the coupling between the interception member 20 and the chamber "C".

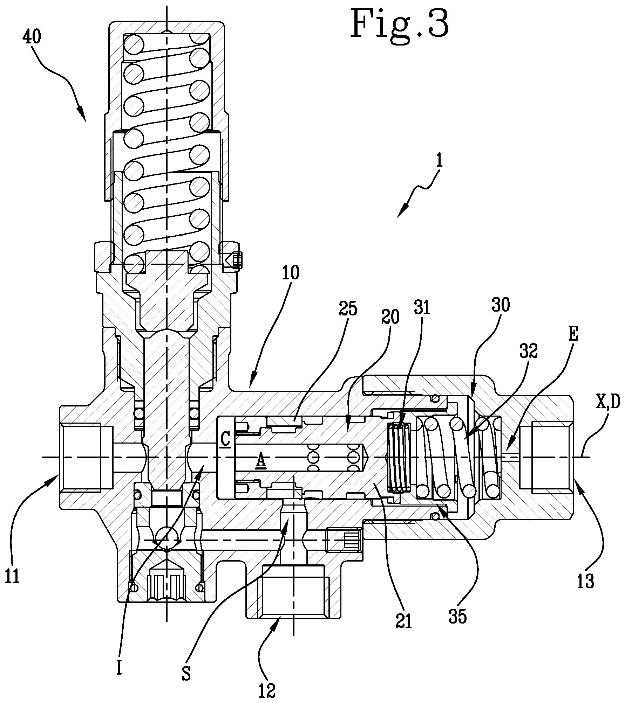

The interception member 20 is further positionable in an intermediate position, illustrated in figure 3, between the discharge position and the delivery position, in which the same interception member 20 obstructs at least partially, preferably completely, both the fluid connection between the inlet section "I" and the discharge section "S" and the fluid connection between the inlet section "I" and the delivery section "E".

The interception member 20 preferably comprises a hollow piston 21 slidably arranged in the chamber "C" and having a main direction of extension "D", preferably coinciding with the axis of extension "X".

The piston 21 preferably defines an internal conduit "A", extending along the main direction of extension "D" of the piston 21, and an opening located at a first end of the piston 21 and facing the inlet section "I" so as to bring about flow communication between the latter and the internal conduit "A".

Furthermore, the internal conduit "A" is preferably blind at a second end of the piston 21, opposite the first end.

The piston 21 preferably defines a first and a second plurality of openings 22 and 23 between the internal conduit "A" and an external surface of the piston 21, preferably arranged in circumferential grooves of the latter and facing the internal surface 15.

Both the first and the second plurality of openings 22 and 23 are circumferentially distributed around the direction of extension "D". Furthermore, the first and the second plurality of openings 22 and 23 are axially spaced apart along the direction of extension "D".

In particular, the first plurality of openings 22 is configured and/or arranged in such a manner as to bring about a fluid connection between the internal conduit "A" and the discharge section "S" when the piston 21 is in the discharge position, whereas the second plurality of openings 23 is configured and/or arranged in such a manner as to bring about a fluid connection between the internal conduit "A" and the delivery section "E" when the piston 21 is in the delivery position.

In an unillustrated embodiment, both the first and the second plurality of openings 22 and 23 can be replaced, respectively, by a single first opening 22 and a single first opening 23 configured as described above. Furthermore, the piston 21 has a sealing portion 24, preferably defined by a shoulder thereof, complementarily shaped to the internal surface 15 and arranged so as to occlude, unless there is leakage caused by the coupling between the piston 21 and the chamber "C", the fluid connection between the inlet section "I" and the delivery section "E" when the piston 21 is in the discharge position and preferably in the intermediate position.

At the terminal end of the piston 21, downstream of the sealing portion 24, two drains 41 are present (illustrated in figure 1).

Said pair of drains 41 has the function of maintaining the delivery section "E" in connection with the discharge section "S" in the bypass position. The piston 21 preferably has a slidable coupling with clearance with respect to the chamber "C", so as to minimise the sliding friction inside the chamber "C" and allow a slight leakage of fluid between the delivery section "E" and the inlet section "I".

Furthermore, the piston 21 is preferably metal and has constructive tolerances in line with the clearance provided between it and its housing in the chamber "C".

The interception member 20 preferably further comprises a bushing-shaped body 25 externally fitted onto the piston 21 in such a manner as to have radial clearance with respect to the piston 21 in a plane normal to the direction of extension "D".

The bushing-shaped body 25 is preferably made of a ceramic material and is complementarily shaped to the internal surface 15 so as to have a slidable coupling flush therewith, in which the bushing-shaped body 25 is movable between the discharge position and the delivery position, drawn by the piston 21 along the axis of extension "X".

The bushing-shaped body 25 is configured and/or arranged in such a manner as to occlude the discharge section "S" in the delivery position and preferably in the intermediate position, being arranged in a position facing it.

Furthermore, the bushing-shaped body 25 is configured and/or arranged in such a manner as to free the discharge section "S" in the discharge position, being arranged in a position offset therefrom so as to enable a fluid connection between the inlet section "I" and the discharge section "S". Advantageously, the radial clearance between the bushing-shaped body 25 and the piston 21 enables a reciprocal floating between them and, in the delivery position and preferably in the intermediate position, brings about a suction of the bushing-shaped body 25 towards the discharge section "S", which contributes to an effective hermetic closure thereof. The piston 21 is preferably made in two reversibly and reciprocally connectable parts so as to enable the insertion and withdrawal of the bushing-shaped body 25.

Furthermore, the piston 21 has respective shoulders 26a and 26b suitable for axially constraining the bushing-shaped body 25 along the direction of extension "D" and arranged in such a manner as to define a positioning with axial clearance of the bushing-shaped body 25 along said direction of extension "D".

Furthermore, the valve 1 comprises an elastic means 30 configured to exert an elastic force on the interception member 20 so as to press the latter towards the discharge position.

The elastic means 30 determines, in cooperation with the pressure upstream and downstream of the interception member 20, the positioning and the movement of the latter between the discharge position and the delivery position.

The interception member 20 is, during use, subjected to an inlet pressure of a fluid at the inlet section "I" which exerts a thrust against the interception member 20 towards the delivery position.

During use, the inlet pressure is equal to the pressure of the fluid flowing out of the hydraulic pump connected to the first connecting portion 11, unless there are any pressure drops or any valve devices acting on the pressure upstream of the interception member 20.

Furthermore, the interception member 20 is, during use, subjected to a delivery pressure of a fluid at the delivery section "E" which exerts a thrust against the interception member 20 towards the discharge position.

During use, the delivery pressure is equal to the pressure of the fluid in a delivery gun connected to the third connecting portion 13, unless there are any pressure drops.

If, in the balance of the forces acting on the interception member 20, the thrust exerted by the inlet pressure exceeds the sum of the thrusts exerted by the elastic means 30 and by the delivery pressure, the interception member 20 will move towards the delivery position.

If, by contrast, the sum of the thrusts exerted by the elastic means 30 and by the delivery pressure exceeds the thrust exerted by the inlet pressure, the interception member 20 will move towards the discharge position.

The elastic means 30 comprises a first elastic element 31 and a second elastic element 32 arranged in series with each other between the interception member 20 and the abutment wall 16, preferably respectively directly abutting against the interception member 20 and the abutment wall 16.

Both the first and second elastic elements 31 and 32 preferably comprise helical springs arranged and oriented coaxially to each other, preferably in a direction parallel to the axis of extension "X" and to the direction of extension "D".

The second element 32 has greater rigidity than the first elastic element 31.

The first and second elastic elements 31 and 32 are configured and/or arranged so that the interception member 20, moved by a gradient between the inlet and delivery pressures, compresses the first elastic element 31 during a first movement between the discharge position and the intermediate position and the second elastic element 32 during a second movement between the intermediate position and the delivery position.

The interception member 20 preferably compresses only the first elastic element 31 during the first movement.

Furthermore, the interception member 20 preferably compresses only the second elastic element 32 during the second movement.

The elastic means 30 preferably comprises a stop member 35, preferably a bushing, comprising a guide portion 36 interposed between the first and second elastic elements 31 and 32 so as to move the stop member 35 as a function of the deformations of the latter.

The guide portion 36 is preferably defined by an internal shoulder of the stop member 35 having faces turned in opposite directions on which respective ends of the first and second elastic elements 31 and 32 are abuttingly arranged.

The stop member 35 preferably has a stop surface 37 arranged in such a manner as to stop against a respective abutment surface 27 of the interception member 20 so as to define a configuration of maximum compression of the first elastic element 31, in which it is arranged in a limit stop or stacked configuration.

In greater detail, the stop surface 37 and the abutment surface 27 determine a limit stop to the compression of the first elastic element 31, preferably reached upon the positioning of the interception member 20 in the intermediate position and maintained during the second movement of the interception member 20 between the intermediate position and the delivery position, so that only the second elastic element 32 is deformed during the second movement.

Furthermore, the stop member 35 preferably has a further stop surface 38 arranged in such a manner as to stop against the abutment wall 16 so as to define a limit stop to compression of the second elastic element 32. The stop member 35 preferably has an external shoulder 39 configured to stop against a respective abutment shoulder 19 defined by the hollow element 10 so as to define a configuration of maximum extension of the second elastic element 32.

Furthermore, the second elastic element 32 is preferably configured to maintain an elastic load with residual compression in the configuration of maximum extension.

More in particular, the first and second elastic elements 31 and 32 are configured and/or arranged so that the elastic force of the second elastic element 32 in the configuration of maximum extension is greater than the elastic force of the first elastic element 31 in the configuration of maximum compression.

The stop member 35 is preferably arranged in such a manner that, during a movement of the interception member 20 from the discharge position to the intermediate position, only the first elastic element 31 is deformed until stopping between the stop surface 37 and the abutment surface 27, whereas the second elastic element 32 has sufficient precompression to resist the thrust exerted by the interception member 20.

Subsequently, during a movement of the interception member 20 from the intermediate position to the delivery position, the contact between the stop surface 37 and the abutment surface 27 prevents further compressions of the first elastic element 31 and, therefore, only the second elastic element 32 is deformed by compression.

Similarly, the stop member 35 is arranged in such a manner that, during a movement of the interception member 20 from the delivery position to the intermediate position, only the second elastic element 32 is deformed by extension until the external shoulder 39 stops against the abutment shoulder 19, preferably in the intermediate position.

Subsequently, during a movement of the interception member 20 from the intermediate position to the discharge position, the contact between the external shoulder 39 and the abutment shoulder 19 prevents further extensions of the second elastic element 32 and, therefore, only the first elastic element 31 is deformed by extension.

The valve 1 preferably further comprises a pressure regulating mechanism 40 configured to maintain a constant pressure of the fluid through the inlet section "I" and to discharge an excess flow of water through the second connecting portion 12.

The pressure regulating mechanism 40 maintains the inlet pressure constant at a pre-established value and brings about a safety discharge in the event of malfunctions in the valve 1 which prevent the excess water from being discharged.

The present invention achieves the proposed object, overcoming the aforementioned drawbacks in the prior art.

Advantageously, the presence of elastic elements with different rigidity enables the pressure gradient to overcome the lower resistance of the first elastic element in an initial phase of movement of the interception member from the discharge position to the intermediate position, in which the gradient itself is rather low.

Subsequently, in the intermediate position, the discharge section is closed and the absence of exit routes for the incoming water flow brings about an increase in pressure upstream of the interception member, which enables the resistance of the second, more rigid elastic element to be overcome and the movement thereof to be continued up to the delivery position. Furthermore, the presence of the second, more rigid elastic element enables the friction of the interception member to be easily overcome in the initial phase of the passage from the delivery position to the discharge position.

Furthermore, the described structure and configuration of the piston and of the bushing enable the friction of the interception member to be minimised in the described movements and, at the same time, a hermetic closure of the discharge section to be assured in the delivery position.

## Claims

1. A pressure regulating bypass valve (1), comprising:
- a hollow element (10) internally defining a chamber (C), said chamber (C) having an inlet section (I), a delivery section (E) and a discharge section (S);
- an interception member (20) housed inside said chamber (C) and that is slidably movable between a discharge position, in which it defines a fluid connection between the inlet section (I) and the discharge section (S), occluding a fluid connection between the inlet section (I) and the delivery section (E), and a delivery position, in which it defines a fluid connection between the inlet section (I) and the delivery section (E), occluding a fluid connection between the inlet section (I) and the discharge section (S);
- elastic means (30) configured to exert an elastic force on said interception member (20) so as to push said interception member (20) towards the discharge position, said elastic means (30) determining a positioning and/or movement of the interception member (20) between the discharge position and the delivery position as a function of an inlet pressure of a fluid at the inlet section (I) and of a delivery pressure of a fluid at the delivery section (E),
wherein said interception member (20) can additionally be positioned in an intermediate position between the discharge and delivery positions, in which said interception member (20) obstructs the fluid connection between the inlet section (I) and the discharge section (S),
**characterized in that**
said elastic means (30) comprises a first elastic element (31) and a second elastic element (32) having greater rigidity with respect to the first elastic element (31), said first and second elastic elements (31, 32) being arranged in series so that said interception member (20) can reach said intermediate position by means of a deformation of at least said first elastic element (31) and in such a manner that a subsequent passage of the interception member (20) from the intermediate position to the delivery position is determined at least partly by an at least partial compression of the second elastic element (32).

2. The valve (1) according to claim 1, wherein the interception member (20), in the intermediate position, occludes a fluid connection between the inlet section (I) and the discharge section (S) and a fluid connection between the inlet section (I) and the delivery section (E).

3. The valve (1) according to claim 1 or 2, wherein the passage of the interception member (20) from the discharge position to the intermediate position leads to compression of the first elastic element (31) only, but not of the second elastic element (32) and/or wherein the passage of the interception element (20) from the intermediate position to the delivery position leads to compression of the second elastic element (31) only, whereas the first elastic element (31) is arranged in a stacked or limit stop configuration.

4. The valve (1) according to one or more of the preceding claims, wherein said elastic means (30) comprises a stop member (35) comprising an engagement portion (36) interposed between the first and the second elastic element (31, 32), said stop member (35) having a stop surface (37) suitable for stopping against a respective abutment surface (27) of said interception member (20) so as to define a configuration of maximum compression of said first elastic element (31), said configuration of maximum compression of said first elastic element (31) preferably corresponding to said stacked or limit stop configuration of the first elastic element (31).

5. The valve (1) according to claim 4, wherein said stop member (35) has an external shoulder (39) configured to stop against a respective abutment shoulder (19) defined by the hollow element (10) so as to define a configuration of maximum extension of said second elastic element (32), said configuration of maximum extension of said second elastic element (32) bringing about compression preloading of the second elastic element (32).

6. The valve (1) according to claim 5, wherein said preloading of the second elastic element (32) is greater than the thrust exerted by the first elastic element (31) in said stacked or limit stop configuration.

7. The valve (1) according to one or more of the preceding claims, wherein said first and second elastic elements (31, 32) are helical springs that are coaxial with respect to each other and wherein the interception member (20) is slidable between the discharge position and the delivery position in a direction parallel to the axis of said helical springs.

8. The valve (1) according to one or more of the preceding claims, wherein said first elastic element (31) is arranged in a position intercalated between the interception member (20) and the second elastic element (32).

9. The valve (1) according to one or more of the preceding claims, wherein said interception member (20) comprises a hollow piston (21) slidably arranged in the chamber (C) and a bushing-shaped body (25) externally fitted onto said piston (21) in such a manner as to have radial clearance with respect to the piston (21), said bushing-shaped body (25) being configured and/or arranged in such a manner as to be arranged in a position facing said discharge section (S) and to occlude said discharge section (S) at least in the delivery position and disengage said discharge section (S) in the discharge position.

10. The valve (1) according to claim 9, wherein said bushing-shaped body (25) is additionally arranged and/or configured to be arranged in a position facing said discharge section (S) and to occlude said discharge section (S) also in the intermediate position of the interception member (20).

11. The valve (1) according to claim 9 or 10, wherein said piston (21) has respective shoulders (26a, 26b) suitable for axially constraining said bushing-shaped body (25), said shoulders (26a, 26b) defining an axial clearance of the bushing-shaped body (25).

12. The valve (1) according to one or more of claims 9 to 11, wherein said bushing-shaped body (25) is made of a ceramic material and is complementarily shaped to an internal surface (15) of the hollow element (10) defining the chamber (C) so as to exhibit slidable coupling flush with said internal surface (15).

13. The valve (1) according to one or more of claims 9 to 12, wherein said piston (21) exhibits slidable coupling with clearance with respect to said chamber (C).

14. The valve (1) according to one or more of claims 9 to 13, wherein said hollow piston (21) has a prevalent direction of extension parallel to the sliding direction of the interception member (20), said hollow piston (21) having an internal conduit (A) in fluid communication with the inlet section (I) and leading onto an external lateral wall of the piston (21) in at least two openings (22, 23) axially distanced from each other, a first one of said openings (22) being suitable for facing the discharge section (S) in the discharge position and a second one of said openings (23) being suitable for entering into fluid communication with the delivery section (E) in the delivery position.

## Patentansprüche

1. Druckregelendes Bypassventil (1), umfassend:
- ein Hohlelement (10), das intern eine Kammer (C) definiert, wobei die Kammer (C) einen Einlassabschnitt (I), einen Abgabeabschnitt (E) und einen Auslassabschnitt (S) aufweist;
- ein Abfangelement (20), das in der Kammer (C) untergebracht ist und das verschiebbar zwischen einer Auslassposition, in der es eine Fluidverbindung zwischen dem Einlassabschnitt (I) und dem Auslassabschnitt (S) definiert, wobei eine Fluidverbindung zwischen dem Einlassabschnitt (I) und dem Abgabeabschnitt (E) verschlossen wird, und einer Abgabeposition, in der es eine Fluidverbindung zwischen dem Einlassabschnitt (I) und dem Abgabeabschnitt (E) definiert, wobei eine Fluidverbindung zwischen dem Einlassabschnitt (I) und dem Auslassabschnitt (S) verschlossen wird, beweglich ist;
- elastische Mittel (30), die ausgebildet sind, um eine elastische Kraft auf das Abfangelement (20) auszuüben, um das Abfangelement (20) in Richtung der Auslassposition zu drücken, wobei die elastischen Mittel (30) eine Positionierung und/oder Bewegung des Abfangelements (20) zwischen der Auslassposition und der Abgabeposition als Funktion eines Einlassdrucks eines Fluids am Einlassabschnitt (I) und eines Abgabedrucks eines Fluids am Abgabeabschnitt (E) bewirken,
wobei das Abfangelement (20) zusätzlich in einer Zwischenposition zwischen der Auslass- und der Abgabeposition positioniert werden kann, in der das Abfangelement (20) die Fluidverbindung zwischen dem Einlassabschnitt (I) und dem Auslassabschnitt (S) versperrt,
**dadurch gekennzeichnet, dass** die elastischen Mittel (30) ein erstes elastisches Element (31) und ein zweites elastisches Element (32) mit größerer Steifigkeit als das erste elastische Element (31) umfassen, wobei das erste und das zweite elastische Element (31, 32) in Reihe angeordnet sind, sodass das Abfangelement (20) die Zwischenposition durch eine Verformung zumindest des ersten elastischen Elements (31) erreichen kann, sodass ein nachfolgender Übergang des Abfangelements (20) von der Zwischenposition in die Abgabeposition zumindest teilweise durch eine zumindest teilweise Kompression des zweiten elastischen Elements (32) bewirkt wird.

2. Ventil (1) nach Anspruch 1, wobei das Abfangelement (20) in der Zwischenposition eine Fluidverbindung zwischen dem Einlassabschnitt (I) und dem Auslassabschnitt (S) und eine Fluidverbindung zwischen dem Einlassabschnitt (I) und der Abgabeabschnitt (E) verschließt.

3. Ventil (1) nach Anspruch 1 oder 2, wobei der Übergang des Abfangelements (20) von der Auslassposition in die Zwischenposition nur zur Kompression des ersten elastischen Elements (31) führt, nicht jedoch des zweiten elastischen Elements (32) und/oder wobei der Übergang des Abfangelements (20) von der Zwischenposition in die Abgabeposition nur zu einer Kompression des zweiten elastischen Elements (31) führt, während das erste elastische Element (31) in einer Stapel- oder Endanschlagausbildung angeordnet ist.

4. Ventil (1) nach einem oder mehreren der vorhergehenden Ansprüche, wobei die elastischen Mittel (30) ein Anschlagelement (35) umfassen, das einen Eingriffsabschnitt (36) umfasst, der zwischen dem ersten und dem zweiten elastischen Element (31, 32) angeordnet ist, wobei das Anschlagelement (35) eine Anschlagfläche (37) aufweist, die zum Anhalten gegen eine jeweilige Widerlagerfläche (27) des Abfangelements (20) geeignet ist, um eine Ausbildung der maximalen Kompression des ersten elastischen Elements (31) zu definieren, wobei die Ausbildung der maximalen Kompression des ersten elastischen Elements (31) vorzugsweise der Stapel- oder Endschlagausbildung des ersten elastischen Elements (31) entspricht.

5. Ventil (1) nach Anspruch 4, wobei das Anschlagelement (35) eine äußere Schulter (39) aufweist, die ausgebildet ist, um gegen eine jeweilige Widerlagerschulter (19) anzuhalten, die durch das Hohlelement (10) definiert ist, um eine Ausbildung der maximalen Ausdehnung des zweiten elastischen Elements (32) zu definieren, wobei die Ausbildung der maximalen Ausdehnung des zweiten elastischen Elements (32) eine Druckvorspannung des zweiten elastischen Elements (32) herbeiführt.

6. Ventil (1) nach Anspruch 5, wobei die Vorspannung des zweiten elastischen Elements (32) größer ist als der Schub, den das erste elastische Element (31) in der Stapel- oder Endanschlagausbildung ausübt.

7. Ventil (1) nach einem oder mehreren der vorhergehenden Ansprüche, wobei das erste und das zweite elastische Element (31, 32) Schraubenfedern sind, die zueinander koaxial sind, und wobei das Abfangelement (20) zwischen der Auslassposition und der Abgabeposition in einer Richtung parallel zur Achse der Schraubenfedern verschiebbar ist.

8. Ventil (1) nach einem oder mehreren der vorhergehenden Ansprüche, wobei das erste elastische Element (31) in einer Position angeordnet ist, die zwischen dem Abfangelement (20) und dem zweiten elastischen Element (32) angeordnet ist.

9. Ventil (1) nach einem oder mehreren der vorhergehenden Ansprüche, wobei das Abfangelement (20) einen Hohlkolben (21), der verschiebbar in der Kammer (C) angeordnet ist, und einen buchsenförmigen Körper (25) umfasst, der außen an dem Kolben (21) angebracht ist, sodass ein radiales Spiel in Bezug auf den Kolben (21) vorliegt, wobei der buchsenförmige Körper (25) so ausgebildet und/oder angeordnet ist, dass er in einer Position angeordnet ist, die dem Auslassabschnitt (S) zugewandt ist und um den Auslassabschnitt (S) zumindest in der Abgabeposition zu verschließen und den Auslassabschnitt (S) in der Auslassposition zu lösen.

10. Ventil (1) nach Anspruch 9, wobei der buchsenförmige Körper (25) zusätzlich angeordnet und/oder ausgebildet ist, um in einer Position angeordnet zu sein, die dem Auslassabschnitt (S) zugewandt ist, und den Auslassabschnitt (S) auch in der Zwischenposition des Abfangelements (20) zu verschließen.

11. Ventil (1) nach Anspruch 9 oder 10, wobei der Kolben (21) jeweilige Schultern (26a, 26b) aufweist, die zum axialen Festspannen des buchsenförmigen Körpers (25) geeignet sind, wobei die Schultern (26a, 26b) ein axiales Spiel des buchsenförmigen Körpers (25) definieren.

12. Ventil (1) nach einem oder mehreren der Ansprüche 9 bis 11, wobei der buchsenförmige Körper (25) aus einem Keramikmaterial besteht und komplementär zu einer Innenfläche (15) des Hohlelements (10) geformt ist, das die Kammer (C) definiert, um eine verschiebbare Kupplung zu zeigen, die bündig mit der Innenfläche (15) ist.

13. Ventil (1) nach einem oder mehreren der Ansprüche 9 bis 12, wobei der Kolben (21) eine verschiebbare Kupplung mit Spiel in Bezug auf die Kammer (C) aufweist.

14. Ventil (1) nach einem oder mehreren der Ansprüche 9 bis 13, wobei der Hohlkolben (21) eine vorherrschende Ausdehnungsrichtung parallel zur Gleitrichtung des Abfangelements (20) aufweist, wobei der Hohlkolben (21) eine Innenleitung (A) in Fluidkommunikation mit dem Einlassabschnitt (I) aufweist und auf eine äußere Seitenwand des Kolbens (21) in zumindest zwei Öffnungen (22, 23) führt, die axial voneinander entfernt sind, wobei eine erste der Öffnungen (22) geeignet ist, um dem Auslassabschnitt (S) in der Abgabeposition zugewandt zu sein, und wobei eine zweite der Öffnungen (23) geeignet ist, um in eine Fluidkommunikation mit dem Abgabeabschnitt (E) in der Abgabeposition einzutreten.

## Revendications

1. Soupape de dérivation de régulation de pression (1), comprenant :
- un élément creux (10) définissant intérieurement une chambre (C), ladite chambre (C) comportant une section d'entrée (I), une section de distribution (E) et une section de décharge (S) ;
- un élément d'interception (20) logé à l'intérieur de ladite chambre (C) et étant mobile de manière coulissante entre une position de décharge, dans laquelle il définit un raccordement fluidique entre la section d'entrée (I) et la section de décharge (S), en obturant un raccordement fluidique entre la section d'entrée (I) et la section de distribution (E), et une position de distribution, dans laquelle il définit un raccordement fluidique entre la section d'entrée (I) et la section de distribution (E), en obturant un raccordement fluidique entre la section d'entrée (I) et la section de décharge (S) ;
- des moyens élastiques (30) configurés pour exercer une force élastique sur ledit élément d'interception (20) de manière à pousser ledit élément d'interception (20) vers la position de décharge, lesdits moyens élastiques (30) déterminant un positionnement et/ou un mouvement de l'élément d'interception (20) entre la position de décharge et la position de distribution en fonction d'une pression d'entrée d'un fluide en correspondance de la section d'entrée (I) et d'une pression de distribution d'un fluide en correspondance de la section de distribution (E),
dans laquelle ledit élément d'interception (20) peut de plus être positionné dans une position intermédiaire entre les positions de décharge et de distribution, dans laquelle ledit élément d'interception (20) obstrue le raccordement fluidique entre la section d'entrée (I) et la section de décharge (S),
**caractérisée en ce que** lesdits moyens élastiques (30) comprennent un premier élément élastique (31) et un deuxième élément élastique (32) ayant une plus grande rigidité par rapport au premier élément élastique (31), lesdits premier et deuxième éléments élastiques (31, 32) étant disposés en série de sorte que ledit élément d'interception (20) peut atteindre ladite position intermédiaire au moyen d'une déformation d'au moins ledit premier élément élastique (31) et d'une manière telle qu'un passage ultérieur de l'élément d'interception (20) de la position intermédiaire à la position de distribution est déterminé au moins partiellement par une compression au moins partielle du deuxième élément élastique (32).

2. Soupape (1) selon la revendication 1, dans laquelle l'élément d'interception (20), dans la position intermédiaire, obture un raccordement fluidique entre la section d'entrée (I) et la section de décharge (S) et un raccordement fluidique entre la section d'entrée (I) et la section de distribution (E).

3. Soupape (1) selon la revendication 1 ou 2, dans laquelle le passage de l'élément d'interception (20) de la position de décharge à la position intermédiaire conduit à la compression du premier élément élastique (31) uniquement, mais pas du deuxième élément élastique (32) et/ou dans laquelle le passage de l'élément d'interception (20) de la position intermédiaire à la position de distribution conduit à la compression du deuxième élément élastique (31) uniquement, alors que le premier élément élastique (31) est disposé dans une configuration empilée ou en butée de fin de course.

4. Soupape (1) selon une ou plusieurs des revendications précédentes, dans laquelle lesdits moyens élastiques (30) comprennent un élément d'arrêt (35) comprenant une partie d'engagement (36) interposée entre le premier et le deuxième élément élastique (31, 32), ledit élément d'arrêt (35) comportant une surface d'arrêt (37) adaptée pour s'arrêter contre une surface de butée (27) respective dudit élément d'interception (20) de façon à définir une configuration de compression maximale dudit premier élément élastique (31), ladite configuration de compression maximale dudit premier élément élastique (31) correspondant, de préférence, à ladite configuration empilée ou de butée de fin de course du premier élément élastique (31).

5. Soupape (1) selon la revendication 4, dans laquelle ledit élément d'arrêt (35) comporte un épaulement externe (39) configuré pour s'arrêter contre un épaulement de butée (19) respectif défini par l'élément creux (10) afin de définir une configuration d'extension maximale dudit deuxième élément élastique (32), ladite configuration d'extension maximale dudit deuxième élément élastique (32) provoquant une précharge de compression du deuxième élément élastique (32).

6. Soupape (1) selon la revendication 5, dans laquelle ladite précharge du deuxième élément élastique (32) est supérieure à la poussée exercée par le premier élément élastique (31) dans ladite configuration empilée ou de butée de fin de course.

7. Soupape (1) selon une ou plusieurs des revendications précédentes, dans laquelle lesdits premier et deuxième éléments élastiques (31, 32) sont des ressorts hélicoïdaux coaxiaux l'un par rapport à l'autre et dans laquelle l'élément d'interception (20) est coulissant entre la position de décharge et la position de distribution dans une direction parallèle à l'axe desdits ressorts hélicoïdaux.

8. Soupape (1) selon l'une ou plusieurs des revendications précédentes, dans laquelle ledit premier élément élastique (31) est disposé dans une position intercalée entre l'élément d'interception (20) et le deuxième élément élastique (32).

9. Soupape (1) selon une ou plusieurs des revendications précédentes, dans laquelle ledit élément d'interception (20) comprend un piston creux (21) disposé de manière coulissante dans la chambre (C) et un corps en forme de douille (25) monté extérieurement sur ledit piston (21) de manière à avoir un jeu radial par rapport au piston (21), ledit corps en forme de douille (25) étant configuré et/ou disposé de manière à être disposé dans une position faisant face à ladite section de décharge (S) et à obturer ladite section de décharge (S) au moins dans la position de distribution et à désengager ladite section de décharge (S) dans la position de décharge.

10. Soupape (1) selon la revendication 9, dans laquelle ledit corps en forme de douille (25) est de plus disposé et/ou configuré pour être disposé dans une position faisant face à ladite section de décharge (S) et pour obturer ladite section de décharge (S) aussi dans la position intermédiaire de l'élément d'interception (20).

11. Soupape (1) selon la revendication 9 ou 10, dans laquelle ledit piston (21) comporte des épaulements (26a, 26b) respectifs adapter pour mettre en prise axialement ledit corps en forme de douille (25), lesdits épaulements (26a, 26b) définissant un jeu axial du corps en forme de douille (25).

12. Soupape (1) selon une ou plusieurs des revendications 9 à 11, dans laquelle ledit corps en forme de douille (25) est constitué d'un matériau céramique et est formé de manière complémentaire à une surface interne (15) de l'élément creux (10) définissant la chambre (C) de manière à présenter un accouplement coulissant affleurant avec ladite surface interne (15).

13. Soupape (1) selon une ou plusieurs des revendications 9 à 12, dans laquelle ledit piston (21) présente un accouplement coulissant avec un jeu par rapport à ladite chambre (C).

14. Soupape (1) selon une ou plusieurs des revendications 9 à 13, dans laquelle ledit piston creux (21) comporte une direction d'extension principale parallèle à la direction de coulissement de l'élément d'interception (20), ledit piston creux (21) comportant un conduit interne (A) en communication fluidique avec la section d'entrée (I) et conduisant sur une paroi latérale externe du piston (21) dans au moins deux ouvertures (22, 23) espacées axialement l'une de l'autre, une première desdites ouvertures (22) étant adaptée pour faire face à la section de décharge (S) dans la position de décharge et une seconde desdites ouvertures (23) étant adaptée pour entrer en communication fluidique avec la section de distribution (E) dans la position de distribution.
